# EUROPEAN PATENT SPECIFICATION

(11) **EP 1 274 572 B1**
(45) Date of publication and mention of the grant of the patent: **18.02.2004**
(21) Application number: 01965495.3
(22) Date of filing: 10.09.2001
(51) Int. Cl.: B32B 27/32

(54) **MULTI-LAYERED POLYOLEFINE BASED FOIL**
MEHRSCHICHTIGE POLYOLEFINFOLIE
FEUILLE MULTICOUCHE A BASE DE POLYOLEFINE

(30) Priority: 17.09.2000 HU 0003661
(43) Date of publication of application: 15.01.2003
(73) Proprietor: Tisza Textil Kft, 3581 Tiszaujvaros (HU)
(72) Inventor: SZEDO, Ferenc, H-3580 Tiszujváros (HU); JAKO, András, H-3580 Tiszaujváros (HU); THUROCZY HARANGOZO, Mária, H-3580 Tiszaujváros (HU)
(74) Representative: Viering, Jentschura & Partner
(86) International application number: PCT/HU2001/000091
(87) International publication number: WO 2002/022357

(56) References cited:
- WO-A-95/30598

## Description

The subject matter of the invention is a multi-layered polyolefine based foil, particularly for manufacturing block-bottom end valve sacks and/or block-bottom pillow sacks, as well as a method for manufacturing the said foil.

The block-bottom end valve sacks, and the block-bottom pillow sacks made of polyolefine based materials are well known in the packaging technology.

The bottom and the cover parts, as well as the valve of sacks made of PE (polyethylene) only by extrusion, are bound to the body of the sack by a two-component adhesive mixture (which consists of a linear polyester resin and an aromatic isocyanate resin in proportions 10:1 solved in ethyl acetate).

This solution enables to manufacture valves purely of PE by extrusion, the said valves provide proper closing.

The main drawback of this solution is that it requires adhesive of narcotic effect, irritating the skin and mucous membrane and a dangerous waste produced during usage of the said adhesive.

Another drawback of this method is that heat methods cannot be applied for the fixation because the hot air of 600 - 700 °C shrinks the PE foil.

In the manufacturing of another types of sacks the bottom and the cover parts, as well as the valves are welded to the body of the sack.

This method is described in the published patent applications PCT/AT 95/00080, WO95/30598, as well as in the Hungarian patent application published under number T/77749. The bottom and the cover patches, as well as the valve are fastened by hot air welding. The material of sacks described in the above mentioned patent documents is a fabric of monoaxially drawn tapes laminated by a mixture of LDPE-PP (low-density polyethylene-polypropylene) on the both sides of the fabric. This latter solution provides a environmentally friendly method simpler than the previous one instead of gluing providing extraordinarily high strength at a small specific weight.

The drawback of this solution is that the valve manufactured by this method is very rigid, it does not close the sack as necessary, so the loaded material can spill either when the sack is pulled off the loading pipe or when the sacks are stored on a pallet.

The spilled material causes a loss and environment pollution.

Comparing the two solutions, it can be established that the extruded components can be manufactured at lower cost and more simply, but they cannot be assembled by the method of welding, only by gluing. It causes important drawbacks. The manufacturing of sacks of fabric of polymer stripes is more expensive, the components can be assembled by environment friendly method of welding, but the sack does not close properly because of the rigidity of the valve.

The aim of the present invention is to eliminate the drawbacks of the above mentioned solutions by establishment of a multi-layered polyolefine based foil,
- which can be processed by environment friendly methods usual for plastic fabrics namely by welding;
- provides a required soft and smooth surface even at the critical locations, like the bottom and the valve of the ready product as it can be provided at the products made of pure extruded PE but omitting the gluing, which causes environment contamination and additional costs;
- and provides equivalent parameters of strength.

The invention is based on the recognition, that the application of a plastic foil composed of several layers having different properties, which mutually complement each other, can help to reach the defined target.

The experiments performed in industrial environment proved that three layers are necessary and sufficient provided that the composition and the thickness of the layers are adequate.

According to invention the defined target can be reached using a foil consisting of two external and a middle layers. The external layers consist of 25 to 30 % by weight of LDPE (low density polyethylene) having low melting point, and 70 to 75 % by weight of PP (polypropylene) having high melting point. The middle layer consists of 40 to 45 % by weight of LLDPE (linear low-density polyethylene) and 50 to 55 % by weight of PP (polypropylene).

The content of PP of the individual layers prevents from shrinking the foil under the welding when air flow of 600 to 700 °C is blown into bag, because the melting point of PP is higher by 50 to 60 °C than that of polyethylene. The LDPE content of the external layers enables to melt the external layers and weld them under influence of pressing force. The LLDPE content provides adequate properties of strength and extension to the foil.

The internal layer of the foil contains also a PE based anti-adhesive master batch of 1 to 2 % by weight, as anti-blocking additive.

This additive prevents the internal surfaces of the valve from blocking when the valve is fastened to the sack.

The middle layer contains a PE based coloring master batch in addition to the above mentioned polymers.

The sacks do not require ageing or tempering after manufacturing as result of the solution according to invention.

The glued sacks require storage at least 72 hours long at a temperature at least 20 °C in a closed room for completion of cross-bond of the two-component glue.

The subject matter of the invention is a multi-layered polyolefine based foil preferably for manufacturing block-bottom end valve sacks and/or block bottom pillow sacks.

The characteristic features of the foil according to invention are that:
its outside layer consists of a mixture of LDPE of 25 to 30 % by weight having low melting point and of PP of 70 to 75 % by weight having high melting point,
the middle layer consists of a mixture of LLDPE of 40 to 45 % by weight, of PP of 55 to 60 % by weight and a PE based coloring master batch,
the inside layer consists of a mixture of LDPE of 24 to 29 % by weight, of PP of 69 to 74 % by weight and an anti-blocking additive.

The thickness of the layers of the foil according to invention are as follows: the thickness of the outside layer is preferably 20 to 70 µm, that of the middle layer is preferably 20 to 80 µm and that of the inside layer is preferably 20 to 70 µm.

The subject matter of the invention is furthermore the method of manufacturing of the multi-layered foil according to invention having the characteristic feature that it is mainly manufactured by co-extrusion as a blown up tubular product.

The subject matter of the invention is furthermore a method for manufacturing the multi-layered foil according to invention by casting as flat foil.

These methods are, of course the most advantageous ones to manufacture the multi-layered foil, but it can be manufactured by any other known method too.

The Figure 1 shows the multi-layered foil according to invention, made by co-extrusion as tubular product.

The Figure 2 shows the same foil made by casting as flat foil.

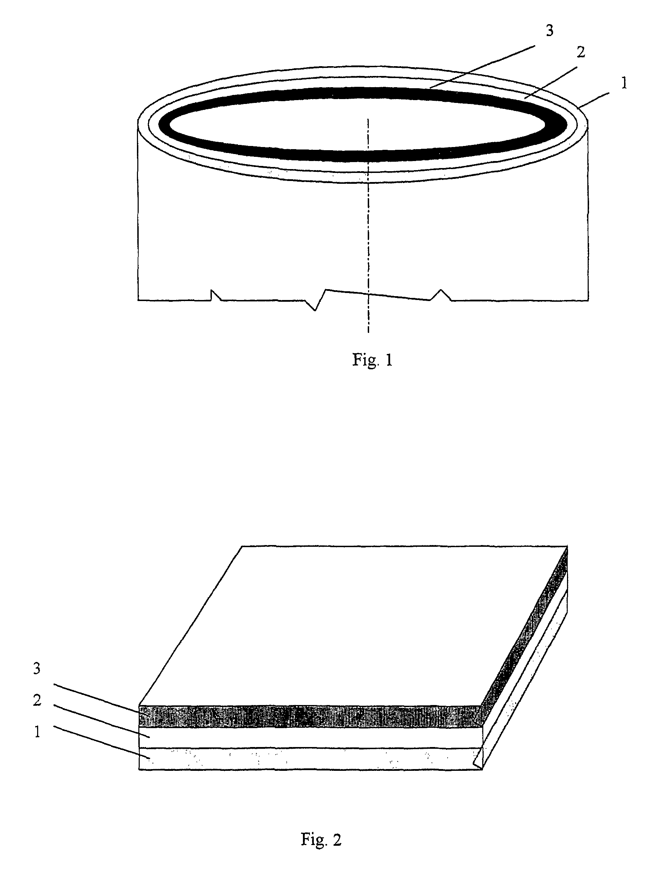

The three layer tubular foil shown in the Figure 1 made by co-extrusion consists of the outside layer 1, the middle layer 2 and the inside layer 3.

The three layer flat foil shown in the Figure 2 made by casting consists of the outside layer 1, the middle layer 2 and the inside layer 3.

The multi-layered foil according to invention is used as body of sack, bottom patch, as well as valve patch.

Nevertheless, the thickness of each individual layer and, of course the thickness of the complete foil are different depending on which part of the sack should be made of the foil and the weight of the loading of the sack.

The practical parameters of the individual layers and the commercial names of the polymers preferably used for the layers are shown in the Tables 1 and 2 below.

**Table 1**

| **Mark of layer** | **Composition** | **MFI 230 °C/21.6 N (g/10 min)** | **Density (g/cm**^{**3**}**)** | **Thickness of layer (**µ**m)** |
|---|---|---|---|---|
| 1 | Copolymer PP | 0.7 - 0.8 | 0.900 - 0.910 | 20 - 70 |
| | LDPE | 4.0 | 0.920 - 0.925 | |
| 2 | Copolymer PP | 0.7 | 0.900 - 0.910 | 20 - 80 |
| | LLDPE | 1.0 | 0.919 - 0.924 | |
| | PE based coloring master batch | 7.0 | 1.5 - 1.7 | |
| | (MB) | | | |
| 3 | Copolymer PP | 0.7 | 0.900 - 0.910 | 20 - 70 |
| | LDPE | 4.0 | 0.920 - 0.924 | |
| | Anti-blocking master batch (AB) | 7.5 | 0.920 - 0.924 | |

**Table 2**

| | | | |
|---|---|---|---|
| The materials which can be used for manufacturing the layered foil | | | |

| **Name of polymer** | **Commercial name** | **MFI** | **Producer** |
|---|---|---|---|
| PP | a) K 793 | 0.7 | TVK Inc. (HU) |
| | b) EPQ 30 RF | 0.8 | MONTELL POLYOLEFINS Co. |
| | | | (BE) |
| LDPE | a) FD 243-51 | 4.0 | TVK Inc. (HU) |
| | b) AFFINITY PT | 7.5 | BSL OLEFINVERBUND GmbH |
| | 1450 | | (DE) |
| LLDPE | a) DLX 2045E | 1.0 | BSL OLEFINVERBUND GmbH |
| | b) LUPOLEX 25GFA | 0.7 | (DE) |
| | | | ELENAC GmbH (DE) |

The parameters of preferably used additives are as follows:

The coloring master batch in the middle layer 2 is a PE based mixture colored with pigments having heat resistance practically up to 250 °C, the commercial name of the material is preferably MB 702 blue 1606, its MFI value is 7.0, produced by TVK Inc. (HU).

The anti-blocking additive used in the inside layer 3 has the commercial name preferably AB 02 FF, its MFI value is 7.5, produced by BASF (DE), its heat resistance is practically 250 °C.

The multi-layered foil, its composition and method of manufacturing are shown by the examples of embodiment below.

### Example 1

A flat foil for patch of valve is manufactured by casting.

The individual layers are laid one above another by casting.

The composition of the individual layers and the parameters of the used polymers and additives are shown in the table below.

The whole thickness of the foil is 100 µm.

| Mark of the layer | Thicknes s (µm) | Composition of the material | | Proportion of component s | MFI (g/10 min) | Density (g/cm³) |
|---|---|---|---|---|---|---|
| 1 | 30 | TIPPLEN K 793 | Co-PP | 72 | 0.7 | 0.900 |
| | | FD 24351 | LDPE | 28 | 4.0 | 0.924 |
| 2 | 40 | TIPPLEN K 793 | Co- PP | 55 | 0.7 | 0.900 |
| | | DLX 2045 E | LLDPE | 40 | 1.0 | 0.920 |
| | | 702 blue 1606 | | | | |
| | | coloring master batch | MB | 5 | 4.0 | 0.990 |
| 3 | 30 | TIPPLEN K 793 | Co-PP | 70.5 | 0.7 | 0.900 |
| | | FD 243-51 | LDPE | 28 | 4.0 | 0.924 |
| | | AB 02 | AB | 1.5 | | 0.940 |

### Example 2

Manufacturing of foil of three layers by co-extrusion as tubular product for body of sack.

The temperatures of basic materials are set to 220 °C at the extruders feeding the individual layers and at the apparatus blowing up the foil.

The whole thickness of the foil is 140 µm.

The parameters and compositions of the individual layers are shown below.

| Mark of the layer | Thickness (µm) | Composition of the material | | Proportion of component s | MFI (g/10 min) | Density (g/cm³) |
|---|---|---|---|---|---|---|
| 1 | 40 | TIPPLEN K 793 | Co-PP | 72 | 0.7 | 0.900 |
| | | FD 24351 | LDPE | 28 | 4.0 | 0.924 |
| 2 | 60 | TIPPLEN K793 | Co- PP | 55 | 0.7 | 0.900 |
| | | DLX 2045 E | LLDPE | 40 | 1.0 | 0.920 |
| | | coloring master | | | | |
| | | batch named | | | | |
| | | Ampacet white | MB | 5 | 4.0 | 0.990 |
| 3 | 30 | TIPPLEN K 793 | Co-PP | 70.5 | 0.7 | 0.900 |
| | | FD 243-51 | LDPE | 28 | 4.0 | 0.924 |
| | | AB 02 | AB | 1.5 | | 0.940 |

The bottom, the cover and the valve are welded to the body of sack manufactured by this method.

A sack manufactured by this method is extraordinarily well applicable for loading between 30 and 50 kg.

### Example 3

Manufacturing of foil of three layers by co-extrusion as tubular product for bottom of sack.

The parameters of co-extrusion are the same as in the example 2, the whole thickness of the foil is 160 µm.

Cutting up the foil tube makes the bottom.

The parameters and composition of the individual layers are summarised in the table below.

| Mark of the layer | Thickness (µm) | Composition of the material | | Proportion of component s | MFI (g/10 min) | Density (g/cm³) |
|---|---|---|---|---|---|---|
| 1 | 40 | TIPPLEN K 793 FD 24351 | Co-PP LDPE | 72 28 | 0.7 4.0 | 0.900 0.924 |
| 2 | 80 | TIPPLEN K793 | Co- PP | 55 | 0.7 | 0.900 |
| | | DLX 2045 E | LLDPE | 40 | 1.0 | 0.920 |
| | | coloring master | | | | |
| | | batch named | | | | |
| | | Ampacet white | MB | 5 | 4.0 | 0.990 |
| 3 | 40 | TIPPLEN K 793 | Co-PP | 70.5 | 0.7 | 0.900 |
| | | FD 243-51 | LDPE | 28 | 4.0 | 0.924 |
| | | AB 02 | AB | 1.5 | | 0.940 |

The bottom is welded to the body of sack.

### Example 4

All the operations are the same as in the Example 2, but the thickness of the outside layer is 35 µm, that of the middle layer is 50 µm, and that of the inside layer is 35 µm.

So the whole thickness of the foil is 120 µm.

The sack body can be used to manufacture sacks for load up to 30 kg.

The advantageous features of the foil according to invention are as follows:

It has good mechanical properties as result of the composition and thickness of the individual layers, so a thinner foil than the traditional one-layer ones can be applied for the same load capacity.

The technological steps are less than in manufacturing of sacks of fabrics made of PP stripes.

The covers and bottoms do not shrink under assembly by welding, so the surfaces can be very well printed providing surface for information and advertisement.

## Claims

1. Multi-layered polyolefine based foil, particularly for manufacturing block- bottom end valve sacks and/or block-bottom pillow sacks, **characterized by** that
- the outside layer (1) consists of a mixture of LDPE of 25 - 30 % by weight and of PP of 70 - 75 % by weight,
- the middle layer (2) consists of a mixture of LLDPE of 40 - 45 % by weight, of PP of 55 - 60 % by weight and a PE based coloring master batch,
- the inside layer (3) consists of a mixture of LDPE of 24 - 29 % by weight, of PP of 69 - 74 % by weight and a PE based anti-blocking additive.

2. The multi-layered polyolefine foil according to the Claim 1 **characterized by** that the thickness of the outside layer (1) is 20 - 70 µm.

3. The multi-layered polyolefine foil according to the Claim 1 **characterized by** that the thickness of the middle layer (2) is 20 - 80 µm.

4. The multi-layered polyolefine foil according to the Claim 1 **characterized by** that the thickness of the inside layer (3) is 20 - 70 µm.

5. A method for manufacturing the multi-layered polyolefine based foil according to claims 1 - 4 **characterized by** that the foil is manufactured by co-extrusion as blown-up tubular foil.

6. A method for manufacturing the multi-layered polyolefine based foil according to claims 1 - 4 **characterized by** that the foil is manufactured by casting as flat foil.

## Patentansprüche

1. Eine mehrschichtige Folie auf der Basis des Polyolefins, die sich vorteilhaft für Herstellung der Säcke mit Bodenfläche und Klappe oder kissenartige Säcke mit Klappe eignet, damit **gekennzeichnet** dass
- die äußere Schichte (1) aus einem Gemisch des Polyäthylens von niedriger Dichtheit (LDPE) von 30 Massenprozenten und Polypropylens (PP) von 70 Massenprozenten besteht,
- die mittlere Schichte (2) aus einem Gemisch des Polyäthylens von sehr niedriger Dichtheit (LLDPE) von 40 bis 45 Massenprozenten, Polypropylens (PP) von 55 bis 60 Massenprozenten und eines auf der Basis des Polypropylen erzeugten Farbstoff enthaltenden Meistergemisches besteht,
- die innere Schichte (3) aus einem Gemisch des Polyäthylens von niedriger Dichtheit (LDPE) von 24 bis 29 Massenprozenten und Polypropylens von 69 bis 74 Massenprozenten und eines das Blocken verhindernden Zusatzstoffs besteht

2. Die mehrschichtige Folie aus Polyolefin nach dem Anspruch 1 damit **gekennzeichnet**, dass die äußere Schichte (1) eine Dicke zwischen 20 und 70 µm hat.

3. Die mehrschichtige Folie aus Polyolefin nach dem Anspruch 1 damit **gekennzeichnet** dass die mittlere Schichte (2) eine Dicke zwischen 20 und 80 µm hat.

4. Die mehrschichtige Folie aus Polyolefin nach dem Anspruch 1 damit **gekennzeichnet** dass die innere Schichte (3) eine Dicke zwischen 20 und 70 µm hat.

5. Ein Verfahren für Herstellung der mehrschichtigen Folie auf der Basis des Polyolefins damit **gekennzeichnet** dass die mehrschichtige Folie durch gemeinsames Strangpressen als aufgeblasene schlauchartige Folie hergestellt wird.

6. Ein Verfahren für Herstellung der mehrschichtigen Folie auf der Basis des Polyolefins damit **gekennzeichnet** dass die mehrschichtige Folie durch den Strangguß als Flachfolie hergestellt wird.

## Revendications

1. Une feuille de matière plastique à plusieurs couches sur la base de polyoléfine propre avantageusement à produire sacs avec base et obturateur ou sacs de forme de coussins avec obturateur avec les caractéristiques que
- la couche extérieure (1) se compose d'un mélange du polyéthylène de densité basse (LDPE) en la quantité de 25 à 30 pour cents de masse et du polypropylène (PP) en la quantité de 70 à 75 pour cents de masse,
- la couche médiale se compose d'un mélange du polyéthylène de densité très basse (LLDP) en la quantité de 40 à 45 pour cents de masse et du polypropylène (PP) en la quanitié de 55 à 60 pour cents et d'un mélange de maître sur la base de polyéthylène contenant le colorant,
- la couche intérieure se compose d'un mélange du polyéthylène de densité basse (LDPE) en la quantité de 24 à 29 pour cents de masse du polypropylène en la quantité de 69 à 74 pour cents de masse et d'un additif sur la base du polyéthylène à empêcher l'adhésion.

2. La feuille sur la base de polyoléfine à plusieurs couches selon la revendication 1 avec la caractéristique que la couche extérieure (1) a l'épaisseur de 20 à 70 µm.

3. La feuille sur la base de polyoléfine à plusieurs couches selon la revendication 1 avec la caractéristique que la couche médiale (2) a l'épaisseur de 20 à 80 µm.

4. La feuille sur la base de polyoléfine à plusieurs couches selon la revendication 1 avec la caractéristique que la couche intérieure (3) a l'épaisseur de 20 à 70 µm.

5. Un procédé à produire la feuille sur la base de polyoléfine à plusieurs couches selon les revendications 1 à 4 **caractérisé par** que la feuille à plusieurs couches est produit par l'extrusion conjointe comme une tuyére gonflée.

6. Un procédé à produire la feuille sur la base de polyoléfine à plusieurs couches selon les revendications 1 à 4 **caractérisé par** que la feuille à plusieurs couches est produit par coulage comme une feuille plane.
